# EUROPEAN PATENT APPLICATION

(11) **EP 4 293 199 A2**
(43) Date of publication of application: **20.12.2023**
(21) Application number: 23178273.1
(22) Date of filing: 08.06.2023
(51) Int. Cl.: F01D 11/00, F16J 15/34, F01D 21/20

(54) **SEAL MONITORING SYSTEM AND METHOD OF MONITORING A SEAL**

(30) Priority: 14.06.2022 US 202217839651
(71) Applicant: Hamilton Sundstrand Corporation, Charlotte, NC 28217-4578 (US)
(72) Inventor: SLAYTER, Matthew, Rockford (US); ARROYO, Emilio, Hoffman Estates (US)
(74) Representative: Dehns

(57) **Abstract**

A shaft system includes a first portion (38) having an outer surface and an inner surface. The inner surface defines a conduit. A second portion (52) includes an outer surface section (62), an inner surface section (64), and a terminal end that extends into the conduit. A bearing is disposed between the inner surface and the outer surface section. A seal assembly (80) is arranged between the first portion and the second portion. The seal assembly includes a first seal member (99) supported by the first portion (38) and a second seal member (123) supported by the second portion (52). The first seal member (99) abuts the second seal member (123) at a seal interface (131). A sensor (138) is bonded to one of the first seal member (99) and the second seal member (123). The sensor (138) is configured to detect a sealing failure at the seal interface.

## Description

### TECHNICAL FIELD

Exemplary embodiments pertain to the art of aircraft and, more particularly, to a shaft seal for a shaft in an aircraft.

### BACKGROUND

Aircraft include a variety of shafts that transmit power from a source to another mechanism. For example, a shaft may connect a gas-breathing engine including a turbine to a generator. That is, the shaft may have a first end connected to a turbine output, in a non-limiting example via a gearbox, and a second end connected to a generator input. In some systems, the shaft may include an inner shaft that provides an interface to the gearbox and the generator and an outer generator rotor shaft. The interface may include an input shaft. The shaft may also serve as an interface to a pump.

In many installations, seals are used to protect bearings and other components. The seal typically includes a stationary portion and a rotating portion. A spring mechanism typically acts on the stationary portion so that sealing contact with the rotating portion is maintained. Typically, carbon or carbon composites are used to form the seals. Over time the carbon seals may wear and cease to function as intended. At such times, repairs are necessary. Repairs could result in unexpected downtimes for an aircraft.

### BRIEF DESCRIPTION

According to an aspect of the invention, a shaft system is disclosed including a first portion having an outer surface and an inner surface. The inner surface defines a conduit. A second portion includes an outer surface section, an inner surface section, and a terminal end that extends into the conduit. A bearing is disposed between the inner surface and the outer surface section. A seal assembly is arranged between the first portion and the second portion. The seal assembly includes a first seal member supported by the first portion and a second seal member supported by the second portion. The first seal member abuts the second seal member at a seal interface. A sensor is bonded to one of the first seal member and the second seal member. The sensor is configured to detect a sealing failure at the seal interface.

Additionally, or alternatively, in this or other non-limiting examples, the first seal member includes a first end, a second end, a first surface extending between the first end and the second end, and a second surface extending between the first end and the second end, the sensor being bonded to the first surface.

Additionally, or alternatively, in this or other non-limiting examples, a spring arranged at the first end of the first seal member, the spring urging the second end of the first seal member into contact with the second seal member.

Additionally, or alternatively, in this or other non-limiting examples, the sensor is a strain gauge.

Additionally, or alternatively, in this or other non-limiting examples, the first seal member includes a cavity extending between the first surface and the second surface, the sensor being bonded to the first seal member in the cavity.

Additionally, or alternatively, in this or other non-limiting examples, a seal assembly support arranged in the conduit the seal assembly support supporting the first seal member at the inner surface.

Additionally, or alternatively, in this or other non-limiting examples, a seal diagnostic system operatively connected to the sensor, the seal diagnostic system detecting changes in the seal assembly through the sensor.

Additionally, or alternatively, in this or other non-limiting examples, the seal diagnostic system includes a non-volatile memory module having stored therein a baseline seal parameter, the seal diagnostic system determining a wear characteristic of the seal assembly based on difference between sensed seal values and the baseline seal parameter.

According to an aspect of the invention, an aircraft system is disclosed including an air breathing engine including a compressor, a turbine mechanically connected to the compressor, and a combustor fluidically connected to the compressor and the turbine. A gearbox is mechanically connected to the turbine. A generator is connected to the airbreathing engine. A shaft system operatively connects the gearbox and the generator. The shaft system includes a first portion having an outer surface and an inner surface. The inner surface defines a conduit. A second portion includes an outer surface section, an inner surface section, and a terminal end that extends into the conduit. A bearing is disposed between the inner surface and the outer surface section. A seal assembly is arranged between the first portion and the second portion. The seal assembly includes a first seal member supported by the first portion and a second seal member supported by the second portion. The first seal member abuts the second seal member at a seal interface. A sensor is bonded to one of the first seal member and the second seal member. The sensor is configured to detect a sealing failure at the seal interface.

Additionally, or alternatively, in this or other non-limiting examples, the first seal member includes a first end, a second end, a first surface extending between the first end and the second end, and a second surface extending between the first end and the second end, the sensor being bonded to the first surface.

Additionally, or alternatively, in this or other non-limiting examples, a spring arranged at the first end of the first seal member, the spring urging the second end of the first seal member into contact with the second seal member.

Additionally, or alternatively, in this or other non-limiting examples, the sensor is a strain gauge. Additionally, or alternatively, in this or other non-limiting examples, the first seal member includes a cavity extending between the first surface and the second surface, the sensor being bonded to the first seal member in the cavity.

Additionally, or alternatively, in this or other non-limiting examples, a seal assembly support arranged in the conduit the seal assembly support supporting the first seal member at the inner surface.

Additionally, or alternatively, in this or other non-limiting examples, a seal diagnostic system operatively connected to the sensor, the seal diagnostic system detecting changes in the seal assembly through the sensor.

Additionally, or alternatively, in this or other non-limiting examples, the seal diagnostic system includes a non-volatile memory module having stored therein a baseline seal parameter, the seal diagnostic system determining a wear characteristic of the seal assembly based on difference between sensed seal values and the baseline seal parameter.

According to an aspect of the invention, a method of monitoring a seal assembly for a shaft system is disclosed including monitoring a seal member with an embedded sensor, obtaining sensed seal values with the embedded sensor, detecting a change in the sensed seal values, and providing an indication that the seal assembly should be inspected.

Additionally, or alternatively, in this or other non-limiting examples, providing the indication that the seal assembly should be inspected includes predicting a need for future maintenance of the seal assembly based on the change in the sensed seal values.

Additionally, or alternatively, in this or other non-limiting examples, detecting the change in seal values includes detecting seal values changes over time.

Additionally, or alternatively, in this or other non-limiting examples, detecting the change in seal values includes comparting sensed seal values to stored baseline seal values.

### BRIEF DESCRIPTION OF THE DRAWINGS

The following descriptions should not be considered limiting in any way. With reference to the accompanying drawings, like elements are numbered alike:
FIG. 1 depicts an air breathing engine for an aircraft connected to a generator through a shaft system including a shaft system, in accordance with a non-limiting example;
FIG. 2 is a cross-sectional side view of the shaft system of FIG. 1, in accordance with a non-limiting example;
FIG. 3 is a partial cross-sectional view of a seal assembly of the shaft system of FIG. 2 including a sensor and seal diagnostic system, in accordance with a non-limiting example;
FIG. 4 is a block diagram depicting a diagnostic system of the seal assembly of FIG. 3, in accordance with a non-limiting example; and
FIG. 5 is a partial cross-sectional view of a seal assembly of the shaft system of FIG. 2 including a sensor and seal diagnostic system, in accordance with another non-limiting example.

### DETAILED DESCRIPTION

A detailed description of one or more embodiments of the disclosed apparatus and method are presented herein by way of exemplification and not limitation with reference to the Figures.

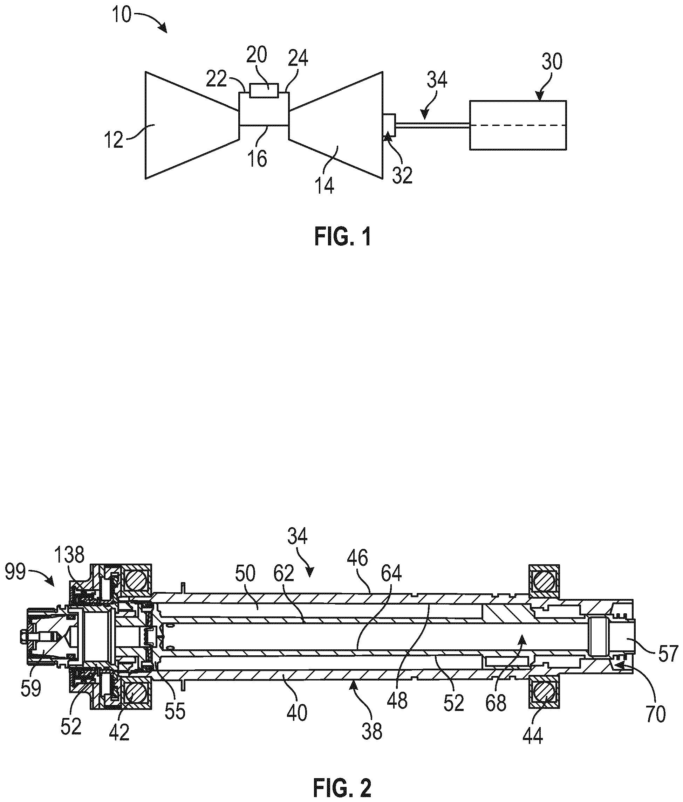

An aircraft system, shown in the form of an air-breathing engine is indicated generally at 10 in FIG. 1. Air-breathing engine 10 includes a compressor 12 mechanically and fluidically connected to a turbine 14. A shaft 16 mechanically connects compressor 12 with turbine 14. A combustor 20 fluidically connects compressor 12 with turbine 14. Combustor 20 includes a combustor inlet 22 connected to compressor 12 and a combustor outlet 24 connected to turbine 14. Air is passed into combustor 20 from compressor 12, combined with a fuel and combusted to form hot gases that pass into and expand through turbine 14 to create power.

A majority of the power generated by air-breathing engine 10 is used for flight operations. A portion of the power is used to drive a generator 30 that generates electrical power for the aircraft. Towards that end, generator 30 is connected to an output 32 of turbine 14 through a shaft system 34. In a non-limiting example shown in FIG. 2, shaft system 34 includes an outer shaft 38 that may define a rotor shaft 40. Outer shaft 38 is supported in generator 30 by a first bearing 42 and a second bearing 44. Outer shaft 38 includes an outer surface 46 and an inner surface 48 defining a conduit 50. Outer surface 46 may support rotor windings (not shown). At this point, it should be understood that while described in terms of connecting an air-breathing engine and a generator, the shaft system in accordance with non-limiting examples, may be used in a wide variety of applications.

In a non-limiting example, an inner shaft 52 is arranged within conduit 50 and selectively coupled to outer shaft 38. Inner shaft 52 defines a torsion shaft and includes a first end 55 and a second end 57. Second end 57 is opposite first end 55. First end 55 includes an input member 59 that provides an interface with turbine output 32. In a non-limiting example, turbine output 32 may take the form of a gearbox 61. Inner shaft 52 includes an outer surface section 62 and an inner surface section 64 that forms a hollow interior 68. Inner shaft 52 is coupled to outer shaft 38 through a coupling 70. Coupling 70 may take the form of a splined coupling (not separately labeled). A seal assembly 80 is arranged between outer shaft 38 and inner shaft 52 adjacent to input member 59.

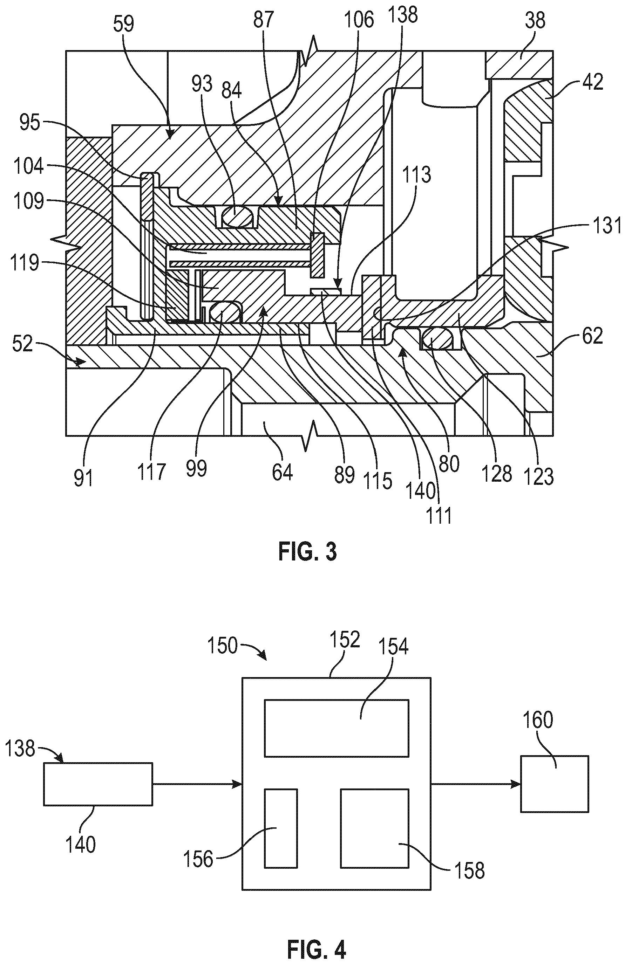

As shown in FIG. 3, seal assembly, in accordance with a non-limiting example, includes a seal assembly support 84 arranged between outer shaft 38 and inner shaft 52. Seal assembly support 84 includes a first section 87 that extends along inner surface 48, a second section 89 that extends along and is spaced from outer surface section 62, and an annular wall 91. Annular wall 91 connects first section 87 and second section 89. An O-ring 93 is arranged between first section 87 and inner surface 48. A first snap ring 95 secures seal assembly support 84 in conduit 50.

In a non-limiting example, a first seal member 99 is supported on second section 89. First seal member 99 is secured to second section 89 with a seal retainer 104 held in place by a second snap ring 106. In a non-limiting example, first seal member 99 includes a first end 109, a second end 111, a first surface 113 and a second surface 115. Second end 111 is axially spaced from first end 109. First surface 113 defines an outer surface that is radially spaced from second surface 115 which defines an inner surface of first seal member 99. A spring 119 is disposed between annular wall 91 and first end 109. Spring 119 exerts an axially directed forces onto first seal member 99. The axially directed force urges first seal member 99 toward a second seal member 123 of seal assembly 80. Second seal member 123 is mounted to outer surface section 62 of inner shaft 52. An O-ring 128 may be disposed between second surface 115 and second section 89.

In a non-limiting example, a sensor 138 is mounted to first surface 113. Sensor 138 may take the form of a strain gauge 140 that is positioned to detect dimensional changes of first seal member 99 that may affect an interface between second end 111 and second seal member 123. Thus, sensor 138 may detect warpage of second end 111, shrinkage that may cause axial length distortions, or other changes that could degrade the interface with second seal member 123. In a non-limiting example, sensor 138 is connected to a seal diagnostic system 150 shown in FIG. 4. Sensor 138 may be hard wired to seal diagnostic system 150 through a conductor (not shown) or may wirelessly communication with diagnostic system 150.

In a non-limiting example, seal diagnostic system 150 includes a controller 152 having a central processing unit (CPU) 154, a non-volatile memory 156, and a seal diagnostic module 158. In a non-limiting example, seal diagnostic system 150 monitors sensor 138. Seal diagnostic module 158 compares sensed values to exemplary values stored in non-volatile memory 156. That is, seal diagnostic module compares sensed seal values to a baseline seal parameter(s) and determines a wear characteristic of the seal assembly based on difference between sensed seal values and the baseline seal parameter. Seal diagnostic module 158 may signal a need for seal replacement via an output 160 based the comparison of sensed valves and stored values. Seal diagnostic module 158 may provide operators with an indication that seal replacement is needed right away, or may provide a prediction of remaining seal life., and a need for future seal maintenance.

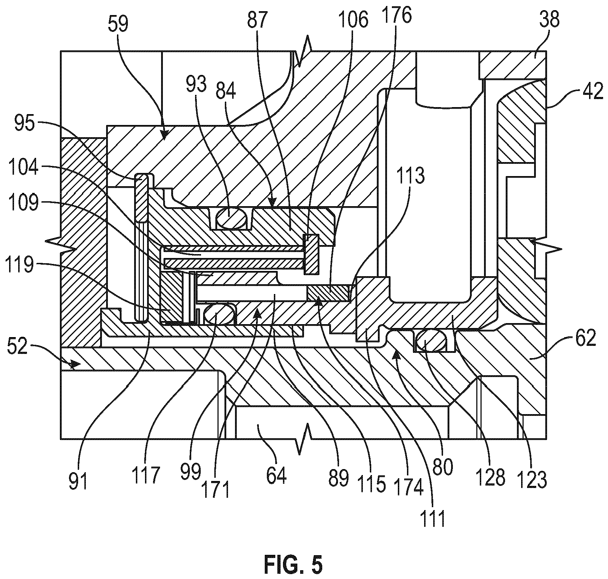

In a non-limiting example shown in FIG. 5, wherein like reference numbers represent corresponding parts in the respective views, first seal member 99 may include a cavity 171 extending from first end 109 towards second end 111 between first surface 113 and second surface 115. In a non-limiting example, a sensor 174 may be disposed within cavity 171 adjacent to second end 111. Sensor 174 may take the form of a strain gauge 176 that is connected to diagnostic system 150.

At this point, it should be understood that seal monitoring systems in accordance with non-limiting examples described herein provide a real time evaluation of seal integrity and may also prognosticate when a seal needs repair or replacement to reduce aircraft downtime, unnecessary repairs, and thus lower maintenance costs and consumer frustration.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A shaft system comprising:
a first portion having an outer surface and an inner surface, the inner surface defining a conduit;
a second portion including an outer surface section, an inner surface section, and a terminal end that extends into the conduit;
a bearing disposed between the inner surface and the outer surface section; and
a seal assembly arranged between the first portion and the second portion, the seal assembly including a first seal member supported by the first portion and a second seal member supported by the second portion, the first seal member abutting the second seal member at a seal interface; and
a sensor bonded to one of the first seal member and the second seal member, the sensor being configured to detect a sealing failure at the seal interface.

2. The shaft system according to claim 1, wherein the first seal member includes a first end, a second end, a first surface extending between the first end and the second end, and a second surface extending between the first end and the second end, the sensor being bonded to the first surface.

3. The shaft system according to claim 2, further comprising: a spring arranged at the first end of the first seal member, the spring urging the second end of the first seal member into contact with the second seal member.

4. The shaft system according to any preceding claim, wherein the sensor is a strain gauge.

5. The shaft system according to any of claims 2 to 5, when dependent on claim 2, wherein the first seal member includes a cavity extending between the first surface and the second surface, the sensor being bonded to the first seal member in the cavity.

6. The shaft system according to any preceding claim, further comprising: a seal assembly support arranged in the conduit, the seal assembly support supporting the first seal member at the inner surface.

7. The shaft system according to any preceding claim, further comprising: a seal diagnostic system operatively connected to the sensor, the seal diagnostic system detecting changes in the seal assembly through the sensor.

8. The shaft system according to claim 7, wherein the seal diagnostic system includes a non-volatile memory module having stored therein a baseline seal parameter, the seal diagnostic system determining a wear characteristic of the seal assembly based on difference between sensed seal values and the baseline seal parameter.

9. An aircraft system comprising:
an air breathing engine including a compressor, a turbine mechanically connected to the compressor, and a combustor fluidically connected to the compressor and the turbine;
a gearbox mechanically connected to the turbine;
a generator operatively connected to the air breathing engine; and
the shaft system of any preceding claim operatively connecting the gearbox and the generator.

10. A method of monitoring a seal assembly for a shaft system, the method comprising:
monitoring a seal member with an embedded sensor;
obtaining sensed seal values with the embedded sensor;
detecting a change in the sensed seal values; and
providing an indication that the seal assembly should be inspected.

11. The method of claim 10, wherein providing the indication that the seal assembly should be inspected includes predicting a need for future maintenance of the seal assembly based on the change in the sensed seal values.

12. The method of claim 10 or 11, wherein detecting the change in seal values includes detecting seal values changes over time.

13. The method of any of claims 10 to 12, wherein detecting the change in seal values includes comparting sensed seal values to stored baseline seal values.
